# EUROPÄISCHE PATENTSCHRIFT

(11) **EP 2 311 656 B1**
(45) Veröffentlichungstag und Bekanntmachung des Hinweises auf die Patenterteilung: **06.03.2013**
(21) Anmeldenummer: 10177251.5
(22) Anmeldetag: 17.09.2010
(51) Int. Cl.: B60C 11/04, B60C 11/13

(54) **Laufstreifenprofil eines Fahrzeugluftreifens**
Run strip profile of a vehicle tyre
Profil de bande de roulement d'une bande pneumatique de véhicule

(30) Priorität: 14.10.2009 DE 102009044246
(43) Veröffentlichungstag der Anmeldung: 20.04.2011
(73) Patentinhaber: Continental Reifen Deutschland GmbH, 30165 Hannover (DE)
(72) Erfinder: Bogenschütz, Peter, 30900 Wedemark (DE); Rittweger, Stefan, 30455 Hannover (DE); Volk, Heiner, 31535 Neustadt (DE)
(74) Vertreter: Finger, Karsten

(56) Entgegenhaltungen:
- EP-A2- 1 048 488
- JP-A- 11 151 912
- US-A1- 2008 047 644

## Beschreibung

Die Erfindung betrifft ein Laufstreifenprofil eines Fahrzeugluftreifens mit einer oder mehreren Profilblockreihen, aus in Umfangsrichtung U des Fahrzeugluftreifens hintereinander angeordneten und jeweils durch eine querverlaufende Rille von einander beabstandeten Profilblockelementen, wobei im Bereich der Bodenaufstandsbreite TA des Laufstreifens die Profilblockelemente in radialer Richtung R nach außen jeweils durch eine die Straßenkontaktfläche bildende Mantelfläche und in Umfangsrichtung U des Fahrzeugluftreifens zu beiden Seiten hin jeweils durch eine Blockflanke begrenzt sind, wobei die eine Blockflanke die eine Rillenwand der das Profilblockelement in Umfangsrichtung zur einen Seite hin begrenzenden Rille und die andere Blockflanke die eine Rillenwand der das Profilblockelement in Umfangsrichtung zur anderen Seite hin begrenzenden Rille bildet, wobei die beiden Blockflanken sich in radialer Richtung R des Fahrzeugluftreifens aus dem Rillengrund der jeweiligen Rille bis zu der die Straßenkontaktoberfläche bildenden Mantelfläche des Profilblockelementes erstrecken, so dass die erste Blockflanke eine erste Schnittkante und die zweite Blockflanke eine zweite Schnittkante mit der die Straßenkontaktoberfläche bildenden Mantelfläche des Profilblockelementes aufweist.

Derartige Fahrzeugluftreifen sind bekannt. Beim Durchlaufen des Reifenlatsches treffen die Profilblockelemente mit ihrer einlaufenden Flanke im Bereich der zwischen Blockflanke und der die Straßenkontaktoberfläche bildenden Mantelfläche gebildeten Schnittkante auf die Straße auf. Beim Auslaufen des Profilblockelementes kommt die auslaufende Blockflanke im Bereich der zwischen auslaufender Blockflanke und Mantelfläche gebildeten Schnittkante ins Schwingen. Aufschlagen und Schwingbewegung beim Auslaufen verursachen die Entstehung von störenden Geräuschen. Darüber hinaus ist der Übergang zwischen Profilblockflanke und radial äußerer Mantelfläche im Bereich der Schnittkante sehr steif ausgebildet und verursacht erhöhten Abrieb sowie Einrolleffekte des Profilblockelementes im Kantenbereich und somit reduzierten Nassgriff.

Aus der gattungsgemäßen EP 1048488 A2 ist es bekannt, in Flanken von Profilblockelementen Dimpel in Form von karlottenförmigen Vertiefungen auszubilden, wobei diese in mehreren radial übereinander angeordneten Reihen angeordnet sind und sich die obere Reihe der Dimpel von der radial äußeren das Profilblockelement begrenzenden Oberfläche geschnitten wird.

Der Erfindung liegt daher die Aufgabe zugrunde, mit einfachen Mitteln bei einem derartigen Laufstreifenprofil bei gutem Nassgriff die Geräuschentstehung zu reduzieren.

Erfindungsgemäß wird die Aufgabe durch Ausbildung eines Laufstreifenprofils eines Fahrzeugluftreifens mit einer oder mehreren Profilblockreihen, aus in Umfangsrichtung U des Fahrzeugluftreifens hintereinander angeordneten und jeweils durch eine querverlaufende Rille von einander beabstandeten Profilblockelementen, wobei im Bereich der Bodenaufstandsbreite TA des Laufstreifens die Profilblockelemente in radialer Richtung R nach außen jeweils durch eine die Straßenkontaktfläche bildende Mantelfläche und in Umfangsrichtung U des Fahrzeugluftreifens zu beiden Seiten hin jeweils durch eine Blockflanke begrenzt sind, wobei die eine Blockflanke die eine Rillenwand der das Profilblockelement in Umfangsrichtung zur einen Seite hin begrenzenden Rille und die andere Blockflanke die eine Rillenwand der das Profilblockelement in Umfangsrichtung zur anderen Seite hin begrenzenden Rille bildet, wobei die beiden Blockflanken sich in radialer Richtung R des Fahrzeugluftreifens aus dem Rillengrund der jeweiligen Rille bis zu der die Straßenkontaktoberfläche bildenden Mantelfläche des Profilblockelementes erstrecken, so dass die erste Blockflanke eine erste Schnittkante und die zweite Blockflanke eine zweite Schnittkante mit der die Straßenkontaktoberfläche bildenden Mantelfläche des Profilblockelementes aufweist, gemäß den Merkmalen von Anspruch 1 gelöst, bei dem entlang wenigstens einer der beiden Schnittkanten sowohl in der die Straßenkontaktoberfläche bildenden Mantelfläche des Profilblockelementes eine Vielzahl n von jeweils parallelen von einander beabstandeten nutenförmigen Vertiefungen ausgebildet sind, die sich von der Schnittkante weg erstrecken und im Abstand 1 von der Schnittkante in der die Straßenkontaktoberfläche bildenden Mantelfläche enden als auch in der die Schnittkante bildenden Blockflanke eine Vielzahl n von jeweils parallelen von einander beabstandeten nutenförmigen Vertiefungen ausgebildet sind, die sich von der Schnittkante weg erstrecken und im Abstand m von der Schnittkante in der Blockflanke enden, wobei in der Schnittkante jede Vertiefung in der Mantelfläche jeweils deckungsgleich mit genau einer Vertiefung in der Blockflanke mündet.

Die erfindungsgemäße Ausbildung bewirkt durch die Vielzahl von Vertiefungen, dass die Aufschlag- und Schwingbewegungen auf eine Vielzahl von mehreren kurzen Aufschlagbereichen und Schwingbereichen verteilt werden. Dies bedingt darüber hinaus, dass die Vielzahl von kleinen aufschlagenden Abschnitten auch nicht exakt zum gleichen Zeitpunkt aufschlagen und auch im ausschwingenden Bereich derartige Abschnitte nicht exakt zum gleichen Zeitpunkt ausschwingen, wodurch eine Arte verwischtes Geräuschspektrum entsteht. Ein derartig verwischtes Geräuschspektrum ist deutlich unauffallender und für das menschliche Gehör weniger störend. Gleichzeitig wird ein sehr gleichmäßiges über die gesamte Schnittkantenlänge bewirktes Aufweichen des Gummimaterials bewirkt, welches durch die Vertiefungen ausreichend Ausweichmöglichkeiten zur Verfügung hat, gleichmäßige Aufweichbewegung sowohl im Bereich der Mantelfläche als auch in der Profilblockflanke bewirkt eine weitere Geräuschreduzierung als auch eine Reduzierung des Abriebs. Bei Einrollbewegungen werden gleichmäßig über die gesamte Erstreckung einer Schnittkante reduziert. Der Reduzierung der aufschlagenden Kantenlänge dient ebenso wie die Reduzierung der Einrolleffekte der Verbesserung des Nassgriffs. Durch Ausbildung mit flachen nutförmigen Vertiefungen in der Flanke sowie in der Mantelfläche ist nahe der Oberfläche des Profilblockelementes bis Nahe zur Schnittkante dennoch ausreichend steifes Untergrundmaterial, ohne das nicht aufgeweicht ist unter Entfaltung seiner versteifenden Wirkung vorhanden, wodurch im Bereich der Schnittkante dennoch hohe Quersteifigkeit aufrechterhalten bleibt, die guten Handling-Eigenschaften entgegenkommt.

Besonders vorteilhaft zur einfachen Sicherstellung dieser Effekte bei Aufrechterhaltung guter Abriebeigenschaften ist die Ausbildung eines Laufstreifenprofils gemäß den Merkmalen von Anspruch 2, wobei die Vielzahl n der jeweils in der Mantelfläche und in der Blockflanke ausgebildeten Vertiefungen mit 10 ≤ n ≤ 15 ist.

Besonders vorteilhaft zur Sicherstellung einer harmonischen, gleichmäßigen Aufschlagbewegung der Profilelemente auf der Straßenoberfläche ist die Ausbildung eines Laufstreifenprofils gemäß den Merkmalen von Anspruch 3, wobei die Vertiefungen jeweils längs ihrer Erstreckung in der Mantelfläche bzw. in der Blockflanke mit einer längs der Schnittkante gemessenen Breite c mit 1mm ≤ c ≤ 5 mm ausgebildet ist, wobei insbesondere die längs der Schnittkante ausgebildeten Vertiefungen alle mit gleich großer Breite c ausgebildet sind.

Besonders vorteilhaft ist die Ausbildung eines Laufstreifenprofils gemäß den Merkmalen von Anspruch 4, wobei der parallel zur Schnittkante gemessene Abstand d zweier längs der Schnittkante benachbarter Vertiefungen mit 1mm ≤ d ≤ 5 mm ausgebildet ist, wobei insbesondere die längs der Schnittkante ausgebildeten Abstände jeweils zweier benachbarter Vertiefungen jeweils mit gleich großem Abstand d ausgebildet sind. Dies ermöglicht eine gleichmäßige Verteilung der Steifigkeit über die Kantenlänge und begünstigt zusätzlich eine harmonische, gleichmäßige Aufschlagbewegung der Profilelemente auf der Straßenoberfläche.

Besonders vorteilhaft ist die Ausbildung eines Laufstreifenprofils gemäß den Merkmalen von Anspruch 5, wobei die längs der Schnittkante ausgebildeten Vertiefungen alle mit gleich großer Breite c und die längs der Schnittkante ausgebildeten Abstände jeweils zweier benachbarter Vertiefungen jeweils mit gleich großem Abstand d ausgebildet sind, wobei die Breite c und der Abstand d mit c = d gleich groß ausgebildet sind.

Besonders vorteilhaft ist die Ausbildung eines Laufstreifenprofils gemäß den Merkmalen von Anspruch 6, wobei die in der Mantelfläche ausgebildeten Vertiefungen längs ihrer Erstreckung von der Schnittkante weg mit mindestens einer in radialer Richtung R des Fahrzeugluftreifens von der Mantelfläche aus gemessenen Tiefe f und in ihrem von der Schnittkante wegweisenden Erstreckungsende mit der Tiefe f ausgebildet ist, wobei die in der Blockflanke ausgebildeten Vertiefungen längs ihrer Erstreckung von der Schnittkante weg mit mindestens einer senkrecht zur Blockflanke aus gemessene Tiefe g und in ihrem von der Schnittkante wegweisenden Erstreckungsende mit der Tiefe g ausgebildet ist, mit 0,5mm ≤ f ≤ 2mm und mit 0,5mm ≤ g ≤ 2mm. Die Tiefe g und f ist in diesen Bereich nicht ausreichend um die Fahreigenschaften auf trockener Straße erkennbar negativ zu beeinflussen, aber tief genug, dass die Blockkante ausreichend weich für ein besonders weiches Abrollen ausgebildet ist.

Besonders vorteilhaft ist die Ausbildung eines Laufstreifenprofils gemäß den Merkmalen von Anspruch 7, wobei die in der Mantelfläche ausgebildeten Vertiefungen längs ihrer Erstreckung ausgehend von dem von der Schnittkante wegweisenden Erstreckungsende in Richtung Schnittkante mit konstanter Tiefe f ausgebildet ist, und wobei die in der Blockflanke ausgebildeten Vertiefungen längs ihrer Erstreckung ausgehend von dem von der Schnittkante wegweisenden Erstreckungsende in Richtung Schnittkante mit konstanter Tiefe g ausgebildet ist. Auf diese Weise kann der Einfluss auf die Blocksteifigkeit des Profilelementes bei vollständiger Nutzung der Vorteile der Vertiefungen minimiert werden.

Besonders vorteilhaft ist die Ausbildung eines Laufstreifenprofils gemäß den Merkmalen von Anspruch 8, wobei die in der Mantelfläche ausgebildeten Vertiefungen längs ihrer Erstreckung ausgehend von dem von der Schnittkante wegweisenden Erstreckungsende in Richtung Schnittkante mit stetig zunehmender Tiefe f ausgebildet ist, und wobei die in der Blockflanke ausgebildeten Vertiefungen längs ihrer Erstreckung ausgehend von dem von der Schnittkante wegweisenden Erstreckungsende in Richtung Schnittkante mit stetig zunehmender Tiefe g ausgebildet ist, wobei in beiden Vertiefungen jeweils ausgehend von dem von der Schnittkante wegweisenden Erstreckungsende in Richtung Schnittkante der Abstand des Vertiefungsgrundes zu der durch die beiden von der Schnittkante wegweisenden Erstreckungsenden gebildeten Verbindungsebene in radialer Richtung R außerhalb der Verbindungsebene stetig bis zu einem maximalen Abstand k > 0 an der Schnittstelle des Grundes der in der Mantelfläche ausgebildeten Vertiefung mit dem Grund der in der Blockflanke ausgebildeten Vertiefung zunimmt. Auf diese Weise kann der Einfluss auf Blocksteifigkeit über den Abrieb länger mit vergleichmäßigtem Übergang genutzt werden.

Besonders vorteilhaft ist die Ausbildung eines Laufstreifenprofils gemäß den Merkmalen von Anspruch 9, wobei die in der Mantelfläche ausgebildeten Vertiefungen längs ihrer Erstreckung ausgehend von dem von der Schnittkante wegweisenden Erstreckungsende in Richtung Schnittkante mit linear zunehmender Tiefe f ausgebildet ist. Auf diese Weise kann der Einfluss auf Blocksteifigkeit über den Abrieb länger mit vergleichmäßigtem Übergang genutzt werden.

Besonders vorteilhaft ist die Ausbildung eines Laufstreifenprofils gemäß den Merkmalen von Anspruch 10, wobei die in der Blockflanke ausgebildeten Vertiefungen längs ihrer Erstreckung ausgehend von dem von der Schnittkante wegweisenden Erstreckungsende in Richtung Schnittkante mit linear zunehmender Tiefe g ausgebildet ist. Auf diese Weise kann die Wirkung der Vertiefungen verstärkt und über den Abrieb länger mit vergleichmäßigtem Übergang genutzt werden.

Besonders vorteilhaft ist die Ausbildung eines Laufstreifenprofils gemäß den Merkmalen von Anspruch 11, wobei jeweils der Abstand 1 von der Schnittkante, in dem die in der Mantelfläche ausgebildeten Vertiefungen enden, jeweils größer ausgebildet ist als die minimale Tiefe g der korrespondierenden Vertiefung in der Blockflanke mit 1 ≤ (1/5L), wobei L die in der Position der Vertiefungen an der Schnittkante in Umfangsrichtung des Fahrzeugluftreifens gemessene Erstreckungslänge des Profilblockelementes angibt.

Der Einfluss der Vertiefungen kann hierdurch in einfacher, sicherer Weise auf den Bereich der zu beeinflussenden Blockkante beschränkt werden.

Besonders vorteilhaft ist die Ausbildung eines Laufstreifenprofils gemäß den Merkmalen von Anspruch 12, wobei der Abstand 1 mit 2mm≤ 1 ≤ 10mm ausgebildet ist. Der Einfluss der Vertiefungen kann hierdurch zuverlässig auf den Bereich der zu beeinflussenden Blockkante beschränkt werden.

Besonders vorteilhaft ist die Ausbildung eines Laufstreifenprofils gemäß den Merkmalen von Anspruch 13, wobei bei allen Vertiefungen in der Mantelfläche längs der Schnittkante der Abstand 1 von der Schnittkante, in dem die Vertiefungen enden, gleich groß ist.

Hierdurch wird in einfacher Weise eine weitgehend gleichmäßige Steifigkeit über die gesamte Erstreckung der Schnittkante ermöglicht.

Besonders vorteilhaft ist die Ausbildung eines Laufstreifenprofils gemäß den Merkmalen von Anspruch 14, wobei die längs der Erstreckung der Schnittkante hintereinander angeordneten Vertiefungen in der Mantelfläche mit unterschiedlichem - insbesondere mit zunehmendem Abstand 1 von der Schnittkante ausgebildet sind.

Besonders vorteilhaft ist die Ausbildung eines Laufstreifenprofils gemäß den Merkmalen von Anspruch 15, wobei jeweils der Abstand m von der Schnittkante, in dem die in der Blockflanke ausgebildeten Vertiefungen enden, jeweils größer ausgebildet ist als die minimale Tiefe f der korrespondierenden Vertiefung in der Mantelfäche, wobei der Abstand m insbesondere mit 0,5mm≤ m ≤ T ausgebildet ist, wobei T die in radialer Richtung R gemessene maximale Rillentiefe der von der Blockflanke begrenzten Rille ist. Hierdurch kann sehr zuverlässig Effekt der Vertiefungen auf den hierzu zu beinflussenden individuell erforderlichen Tiefenerstreckungsbereich eingestellt werden.

Die Erfindung wird im Folgenden an Hand der in den Fig. 1 bis Fig. 9 dargestellten Ausführungsbeispielen näher erläutert. Hierin zeigen
- Fig. 1: Umfangsabschnitt eines Fahrzeugluftreifens für Pkw in Draufsicht,
- Fig. 2: Vergrößerte Darstellung eines Abschnittes einer Profilblockreihe von Fig. 1 in Draufsicht,
- Fig.: 3 Profilblockreihe von Fig. 2 in Schnittdarstellung gemäß Schnitt III-III von Fig. 2,
- Fig. 4: Profilblockelement der Profilblockreihe von Fig. 2 in perspektivischer Darstellung,
- Fig. 5: Darstellung des Profilblockelementes der Figuren 2 bis 4 in Schnittdarstellung gemäß Schnitt V-V von Figur 2 zur Erläuterung des Tiefenverlaufs der Vertiefungen,
- Fig. 6: Schnittdarstellung des Profilblockelementes von Fig. 2 in Schnittdarstellung gemäß Schnitt V-V von Fig. 2 zur Erläuterung einer alternativen Ausbildung der Vertiefungen,
- Fig. 7: Schnittdarstellung des Profilblockelementes von Fig. 2 in Schnittdarstellung gemäß Schnitt V-V von Fig. 2 zur Erläuterung einer weiteren alternativen Ausbildung der Vertiefungen,
- Fig. 8: Darstellung einer Profilblockreihe entsprechend der Darstellung von Fig. 2 mit alternativer Ausbildung der Vertiefungen und
- Fig. 9: Darstellung einer Profilblockreihe entsprechend der Darstellung von Fig. 2 mit einer weiteren alternativen Ausbildung der Vertiefungen.

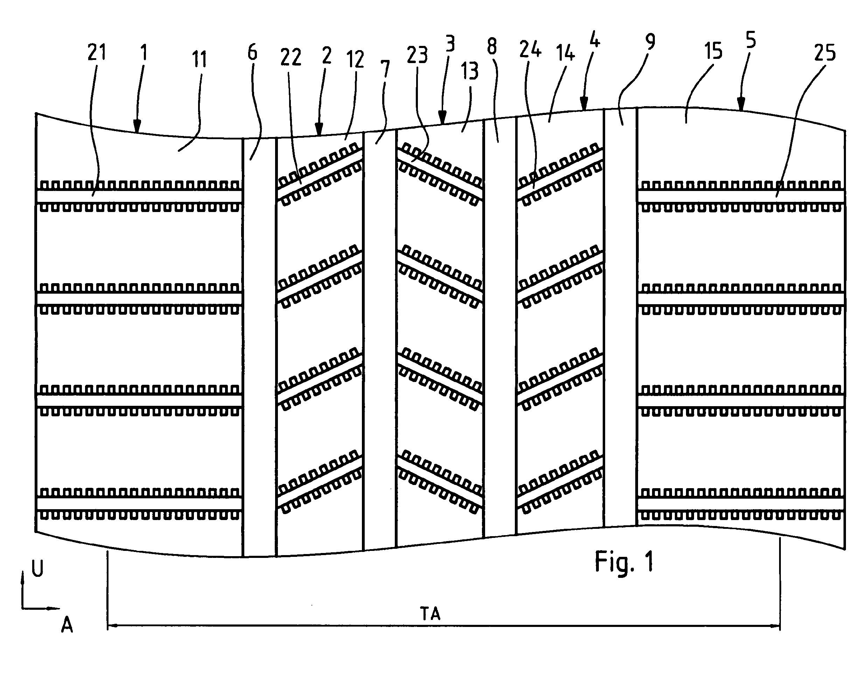

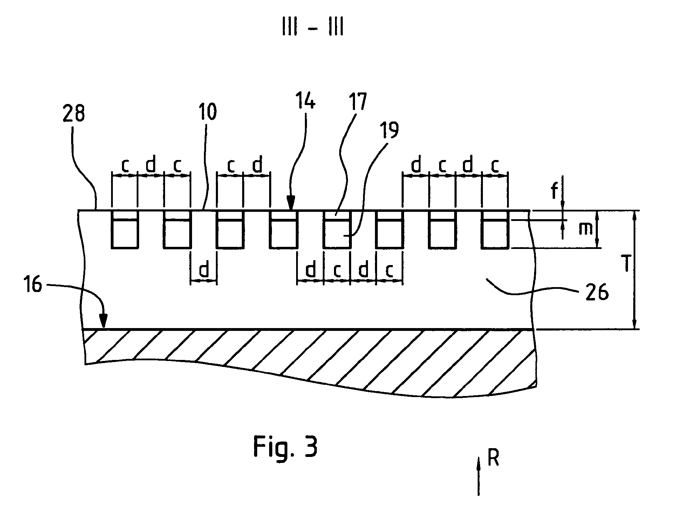

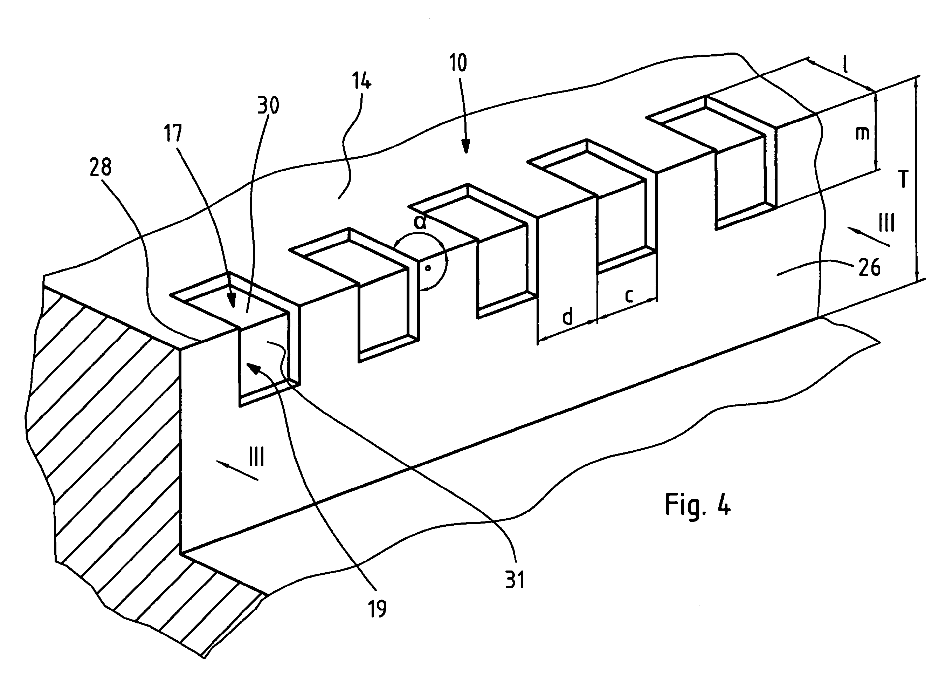

Die Figuren 1 bis 4 zeigen das Laufstreifenprofil eines Fahrzeugluftreifens für Pkw mit mehreren in axialer Richtung A des Fahrzeugluftreifens nebeneinander angeordneten jeweils in Umfangsrichtung U des Fahrzeugluftreifens ausgerichteten und über den gesamten Umfang erstreckten Profilblockreihen 1, 2, 3, 4 und 5. Die Profilblockreihen 1 und 5 sind Schulterprofilblockreihen. Die Bodenaufstandsfläche erstreckt sich mit ihrer Bodenaufstandsbreite TA - wie in Figur 1 dargestellt - von Schulterprofilblockreihe 1 bis zur Schulterprofilblockreihe 5.

Die Profilblockreihe 1 und die Profilblockreihe 2 sind in axialer Richtung A des Fahrzeugluftreifens in bekannter Weise durch eine über den gesamten Umfang des Fahrzeugluftreifens erstreckte in Umfangsrichtung U ausgerichtete Umfangsrille 6 voneinander beabstandet. Die Profilblockreihe 2 und die Profilblockreihe 3 sind in axialer Richtung A des Fahrzeugluftreifens durch eine über den gesamten Umfang des Fahrzeugluftreifens erstreckte und in Umfangsrichtung U ausgerichtete Umfangsrille 7 voneinander beabstandet. Die Profilblockreihe 3 und die Profilblockreihe 4 sind in axialer Richtung A des Fahrzeugluftreifens durch eine über den gesamten Umfang des Fahrzeugluftreifens erstreckte in Umfangsrichtung U ausgerichtete Umfangsrille 8 voneinander beabstandet. Die Profilblockreihe 4 und die Profilblockreihe 5 sind in axialer Richtung A des Fahrzeugluftreifens durch eine über den gesamten Umfang des Fahrzeugluftreifens erstreckte in Umfangsrichtung U ausgerichtete Umfangsrille 9 voneinander beabstandet. Die Profilblockreihe 1 ist in bekannter Weise aus einer Vielzahl von in Umfangsrichtung U hintereinander angeordneten, über den Umfang verteilten und jeweils durch Querrillen 21 von einander beabstandeten Profilblockelementen 11 ausgebildet. Die Profilblockreihe 2 ist in bekannter Weise aus in Umfangsrichtung U hintereinander angeordneten, über den Umfang verteilten und jeweils durch schräg verlaufende Querrillen 22 voneinander beabstandeten Profilblockelementen 12 ausgebildet. Die Profilblockreihe 3 ist in bekannter Weise aus einer Vielzahl von in Umfangsrichtung U hintereinander angeordneten, über den Umfang verteilten und jeweils durch schräg verlaufende Querrillen 23 voneinander beabstandeten Profilblockelementen 13 ausgebildet. Die Profilblockreihe 4 ist in bekannter Weise aus einer Vielzahl von in Umfangsrichtung U hintereinander angeordneten, über den Umfang verteilten und jeweils durch schräg verlaufende Querrillen 24 voneinander beabstandeten Profilblockelementen 14 ausgebildet.

Die Profilblockreihe 15 ist bekannter Weise aus in Umfangsrichtung hintereinander angeordneten, über den gesamten Umfang verteilten und jeweils durch eine Querrille 25 voneinander beabstandeten Profilblockelementen 15 ausgebildet. Die Querrillen 21 erstrecken sich in axialer Richtung A ausgehend von der Umfangsrille 6 bis in eine Position außerhalb der Bodenaufstandsfläche. Die Querrillen 22 erstrecken sich in axialer Richtung A von der Umfangsrille 6 bis zur Umfangsrille 7. Die Querrillen 23 erstrecken sich in axialer Richtung A von der Umfangsrille 7 bis zur Umfangsrille 8. Die Querrillen 24 erstrecken sich in axialer Richtung A von der Umfangsrille 8 bis zur Umfangsrille 9. Die Querrillen 25 erstrecken sich in axialer Richtung A von der Umfangsrille 9 bis in eine axiale Position außerhalb der Bodenaufstandsfläche.

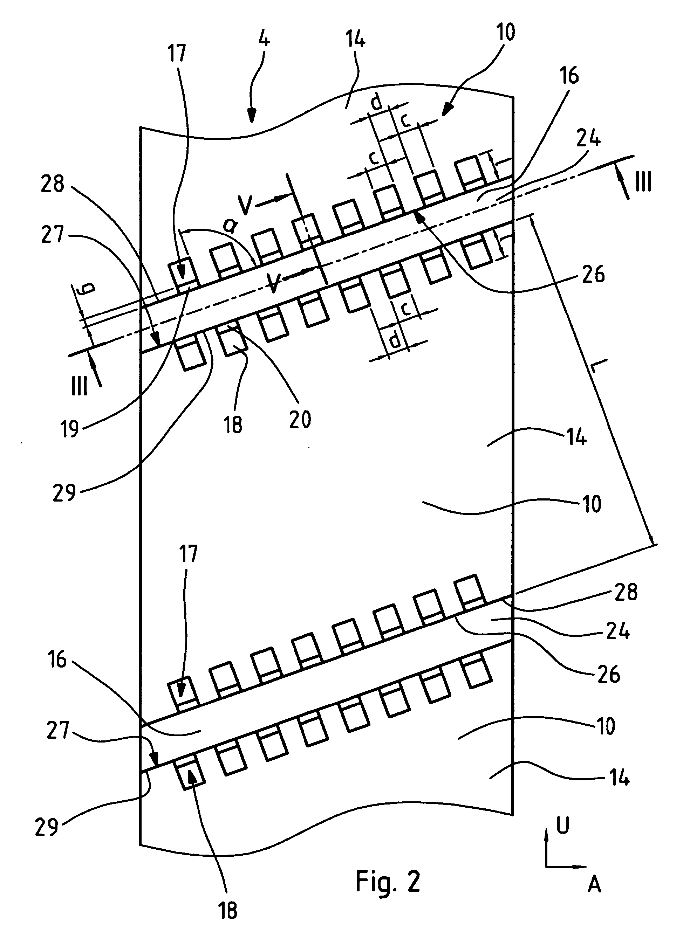

Wie in den Figuren 2 bis 4 am Beispiel der Profilblockreihe 4 dargestellt ist, sind die Profilblockelemente 14 in Umfangsrichtung U jeweils von einer Profilblockelementflanke 26 und von einer Profilblockelementflanke 28 begrenzt, die jeweils eine Rillenwand einer der beiden das Profilblockelement 14 in Umfangsrichtung U begrenzenden Querrillen 16 bilden. Das Profilblockelement 14 ist jeweils in radialer Richtung R nach außen durch eine das Profilblockelement 14 nach radial außen begrenzende Oberfläche 14 begrenzt, die die Straßenkontaktoberfläche des Profilblockelementes 14 bildet und Teil der Mantelfläche des Reifens ist. Die das Profilblockelement 14 zur einen Umfangsrichtung hin begrenzende Profilblockelementflanke 26 erstreckt sich aus dem Rillengrund 24 der das Profilblockelement 14 zu dieser Umfangsseite hin begrenzenden Querrille 16 in radialer Richtung R nach außen bis zu der das Profilblockelement 14 nach radial außen begrenzenden Oberfläche 10. Die Profilblockelementflanke 26 und die das Profilblockelement 14 nach radial außen begrenzende Oberfläche 10 schneiden sich in einer parallel zur Querrille 16 geradlinig verlaufenden Schnittkante 28. Die das Profilblockelement 14 zur anderen Umfangsrichtung hin begrenzende Profilblockelementflanke 27 erstreckt sich aus dem Rillengrund 24 der das Profilblockelement zu dieser Umfangsseite hin begrenzenden Querrillen 16 in radialer Richtung R nach außen bis zu der das Profilblockelement 14 nach radial außen begrenzenden Oberfläche 10. Die Profilblockelementflanke 27 und die das Profilblockelement 14 nach radial außen begrenzende Oberfläche 10 schneiden sich in einer parallel zur Querrille 16 geradlinig verlaufenden Schnittkante 29.

Wie in den Figuren 2, 3 und 4 dargestellt ist, ist längs der Schnittkante 28 über die axiale Breite des Profilblockelementes 14 verteilt eine Vielzahl n von nutförmigen Vertiefungen 17 ausgebildet, die sich jeweils ausgehend von der Schnittkante 28 bis in einen Abstand 1 von der Schnittkante 28 in der radial äußeren Oberfläche 10 in das Profilblockelement 14 hinein erstrecken. Die Vertiefungen 17 sind mit einer in Erstreckungsrichtung der Schnittkante 28 gemessenen Breite c ausgebildet. In der Position einer jeden nutförmigen Vertiefung 17 an der Schnittkante 28 und deckungsgleich zur Vertiefung 17 an der Schnittkante 28 erstreckt sich zusätzlich jeweils in der Profilblockelementflanke 26 ausgehend von der Schnittkante 28 eine Vertiefung 19 ebenfalls mit Erstreckungsbreite c bis in einen Abstand m von der Schnittkante 28 in der Profilblockelementflanke 26.

Die Vertiefungen 19 erstrecken sich in der Profilblockelementflanke 26 mit ihren beiden die Vertiefung in Erstreckungsrichtung der Schnittkante 28 beiderseits begrenzenden parallelen Vertiefungsflanken geradlinig unter dem Einschluss eines Winkels von 90° zur Schnittkante 28. Die Vertiefungen 17 erstrecken sich in der radial äußeren Oberfläche 10 des Profilblockelementes 14 mit ihren in Erstreckungsrichtung der Schnittkante 28 die jeweilige Vertiefung 17 begrenzenden parallelen Vertiefungsflanken geradlinig unter Einschluss eines Winkels α zur Schnittkante 28. Im dargestellten Ausführungsbeispiel ist α = 90° gewählt.

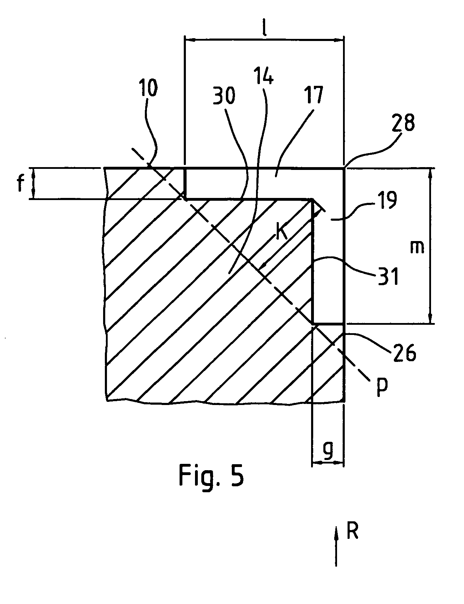

Wie in Fig. 5 dargestellt ist, sind die Vertiefungen 17 mit einer Tiefe f ausgebildet. Die Tiefe f gibt dabei den radialen Abstand zwischen der radial äußeren Oberfläche 10 und dem die Vertiefung 17 nach radial innen begrenzenden Vertiefungsgrund 30 an. Die Vertiefung 19 ist mit einer Tiefe g ausgebildet, welche den senkrecht zur Blockelementflanke 26 gemessenen Abstand des die Vertiefung 19 in Richtung senkrecht zur Blockelementflanke begrenzenden Vertiefungsgrundes 31 der Vertiefung 19 darstellt. In dem in Figur 5 dargestellten Ausführungsbeispiel sind sowohl die Vertiefung 17 als auch die Vertiefung 19 über ihre jeweilige gesamte Erstreckung mit konstanter Tiefe f bzw. g ausgebildet. Dies bedeutet, dass die Vertiefung 17 ausgehend von ihrem von der Schnittkante 28 wegweisenden Ende im Abstand 1 von der Schnittkante bis zur Position des Schnittes des Vertiefungsgrundes 30 der Vertiefung 17 mit dem Vertiefungsgrund 31 der Vertiefungen 19 eine konstante Tiefe f und die Vertiefung 19 ausgehend von deren von der Schnittkante 28 wegweisenden Erstreckungsende in der Blockelementflanke 26 im Abstand m von der Schnittkante 28 bis zum Schnitt des Vertiefungsgrundes 31 mit dem Vertiefungsgrund 30 mit konstanter Tiefe g ausgebildet ist.

In der Schnittdarstellung von Fig. 5 ist die den von der Schnittkante 28 am weitesten entfernt liegenden Punkt des Vertiefungsgrundes 30 mit dem am weitesten von der Schnittkante 28 entfernt liegenden Punkt des Vertiefungsgrundes 31 verbindende Geraden p eingetragen. Wie in Fig. 5 deutlich zu erkennen ist, nimmt dabei ausgehend von dem am weitesten von der Schnittkante 28 entfernt liegenden Erstreckungsende der Vertiefung 17 in Richtung Schnittkante 28 der auf der in radialer Richtung R wegweisenden Seite der Gerade p gemessene Abstand des Vertiefungsgrundes 30 zu der Geraden p kontinuierlich bis zur Erreichung eine Maßes k zu. Ebenso nimmt der Abstand des Vertiefungsgrundes 31 von der Gerade p ausgehend von dem am weitesten von der Schnittkante 28 entfernt liegenden Ende der Vertiefung 19 in Richtung Schnittkante 28 kontinuierlich bis zur Erreichung des Maßes k zu. Der Abstand k ist dabei jeweils erst an der Schnittposition des Vertiefungsgrundes 30 mit dem Vertiefungsgrund 31 erreicht.

Die Breite c der Vertiefungen 17 und 19 ist mit 1mm ≤ c ≤ 5 mm gewählt. Im dargestellten Ausführungsbeispiel ist c = 3mm gewählt.

Längs der Erstreckungsrichtung der Schnittkante28 zueinander benachbarte Vertiefungen 17 bzw. 19 sind jeweils im Abstand d zueinander ausgebildet, wobei d parallel zur Ausrichtung der Schnittkante 28 gemessen wird. Der Abstand d ist dabei mit 1mm ≤ d ≤ 5mm gewählt.

Im dargestellten Ausführungsbeispiel ist c = d = 3mm gewählt.

Die Tiefe f der Vertiefungen 17 ist mit 0,5mm ≤ f ≤ 2mm gewählt. Die Tiefe g der Vertiefungen 19 ist mit 0,5mm ≤ g ≤ 2mm gewählt. Im dargestellten Ausführungsbeispiel sind die Tiefen f und g gleich groß gewählt mit f = g. Im dargestellten Ausführungsbeispiel ist f = g = 1mm gewählt.

Die Erstreckungslänge 1 der Vertiefungen 17 ist größer ausgebildet als die Tiefe g der Vertiefungen 19 in Position des maximalen Erstreckungsmaßes k am Schnitt des Vertiefungsgrundes 30 mit dem Vertiefungsgrund 31.

Die Erstreckungslänge 1 der Vertiefung 17 ist darüber hinaus mit 1 ≤ 1/5 L gewählt, wobei L - wie in Fig. 1 und Fig. 2 dargestellt ist - die senkrecht zur Schnittkante 28 in der radial äußeren Oberfläche 10 gemessene Erstreckungslänge des Profilblockelementes 14 angibt. Die Erstreckungslänge L ist in der dargestellten Ausführung mit parallelen Schnittkanten 28 und 29 der Abstand zwischen den beiden das Profilblockelement 14 begrenzenden Schnittkanten 28 und 29.

Die Erstreckungslänge 1 der Vertiefung 17 ist dabei mit 10mm ≥ 1 ≥ 2mm gewählt. Bei jedoch auch bei sehr lang erstreckten Profilblockelementen maximal 10mm.

Die Erstreckungslänge m der Vertiefungen 19 ist größer ausgebildet als die Tiefe f der Vertiefungen 17 in Position des maximalen Erstreckungsmaßes k am Schnitt des Vertiefungsgrundes 30 mit dem Vertiefungsgrund 31.

Die Erstreckungslänge m ist dabei mit 0,5mm ≤ m ≤ T ausgebildet, wobei T die in radialer Richtung R gemessene Rillentiefe der die Profilblockelementflanke 28 bildenden Querrille 16 darstellt.

Die Zahl n der längs der Schnittkante 28 ausgebildeten Vertiefungen 17 und entsprechend der Vertiefungen 19 ist mit 10 ≤ n ≤ 15 gewählt. Im dargestellten Ausführungsbeispiel in Fig. 2 ist n = 12 gewählt, wobei zur Vereinfachung und besseren Übersichtlichkeit lediglich 8 Vertiefungen eingezeichnet sind.

Fig. 2 zeigt noch eine weitere Ausführung, bei der analog zur Ausbildung der Vertiefungen 17 in der radial äußeren Oberfläche 10 und der Vertiefungen 19 in der Profilblockelementflanke 28 jeweils entlang der Schnittkante 29 Vertiefungen 18 in der radial äußeren Oberfläche 10 und Vertiefungen 20 in der Profilblockelementflanke 29 ausgebildet sind. Bei dieser Ausführung sind somit zu beiden Seiten einer Querrille 16 sowie an beiden in Umfangsrichtung des Profilblockelementes 14 begrenzenden Seiten jeweils korrespondierende Vertiefungen 17 und 19 bzw. 18 und 20 längs der entsprechenden Schnittkante 28 bzw. 29 ausgebildet.

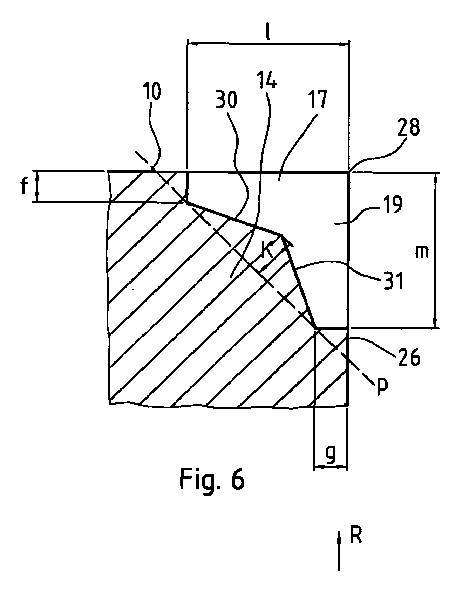

Figur. 6 zeigt eine alternative Ausführung einer Vertiefung am Beispiel der Vertiefungen 17 und 19, bei der die Vertiefung 17 ausgehend von dem von der Schnittkante 28 im Abstand 1 entfernt liegenden Erstreckungsende in Richtung Schnittkante 28 in ihrer Tiefe f kontinuierlich zunimmt und bei der ebenfalls die Vertiefung 19 ausgehend von ihrem im Abstand m von der Schnittkante 28 entfernt liegenden Erstreckungsende in Richtung Schnittkante 28 mit kontinuierlich zunehmender Tiefe g ausgebildet ist. Dabei weist die Vertiefung 17 in dem von der Schnittkante 28 im Abstand 1 entfernt liegenden Vertiefungsende das Maß ihrer minimalen Tiefe fₘᵢₙ auf. Die Vertiefung 19 weist an ihrem von der Schnittkante 28 am im Abstand m entfernt liegenden Ende das Maß ihrer minimalen Tiefe gₘᵢₙ auf. Die Werte der Tiefen für f und g über die ihre gesamte Erstreckung ausgehend vom minimalen Wert fₘᵢₙ bzw. gₘᵢₙ bis zum maximalen Wert in Position des Erreichens des Abstands k, an welchem der Vertiefungsgrund 30 und der Vertiefungsgrund 31 sich schneiden, liegen dabei in den oben im Zusammenhang mit der Erläuterung der Fig. 5 angegebenen, definierten Bereichen für die Wahl der Tiefen von f und g.

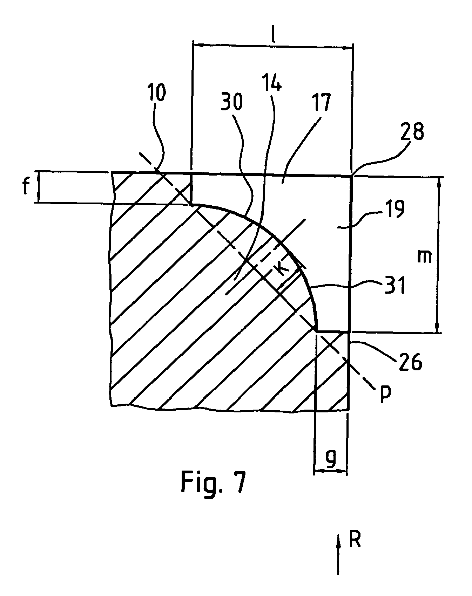

Figur 7 zeigt eine weitre alternative Ausführung der Ausbildung der Vertiefungen 17 und 19, wobei der Vertiefungsgrund 30 und der Vertiefungsgrund 31 jeweils ausgehend von dem im Vertiefungsgrund 30 im Abstand 1 von der Schnittkante 28 entfernt liegenden Erstreckungsende der Vertiefung 17 und der Vertiefungsgrund 31 ausgehend von dem im Abstand m von der Schnittkante 28 entfernt liegenden Erstreckungsende der Vertiefung 19 in Richtung Schnittkante 28 jeweils mit progressiv zunehmender Tiefe f bzw. g ausgebildet sind bis zur Erreichung der Position mit maximalem Abstand k von der Geraden p, in welcher sich Vertiefungsgrund 30 und Vertiefungsgrund 31 treffen.

In der Figur 7, welche eine Schnittdarstellung senkrecht zur Schnittkante 28 darstellt, ist ein Ausführungsbeispiel dargestellt, bei dem der Vertiefungsgrund 30 und der Vertiefungsgrund 31 in dieser Schnittebene einen gekrümmten Verlauf aufweisen.

In dieser Figur 7 ist darüber hinaus eine Ausführung dargestellt, bei der der Vertiefungsgrund 30 und der Vertiefungsgrund 31 in der Position des maximalen Abstandes k tangential ineinander übergehen. Die Tiefen fund g erstrecken sich dabei über den jeweiligen Erstreckungsverlauf des Vertiefungsgrundes 30 bzw. des Vertiefungsgrundes 31 bis zur Erreichung des Punktes des Abstands k von der Geraden p. Die Werte der Tiefen für f und g über die ihre gesamte Erstreckung ausgehend vom minimalen Wert fₘᵢₙ bzw. gₘᵢₙ bis zum maximalen Wert in Position des Erreichens des Abstands k, an welchem der Vertiefungsgrund 30 und der Vertiefungsgrund 31 tangential ineinander übergehen, liegen dabei in den oben im Zusammenhang mit der Erläuterung der Fig. 5 angegebenen, definierten Bereichen für die Wahl der Tiefen von f und g.

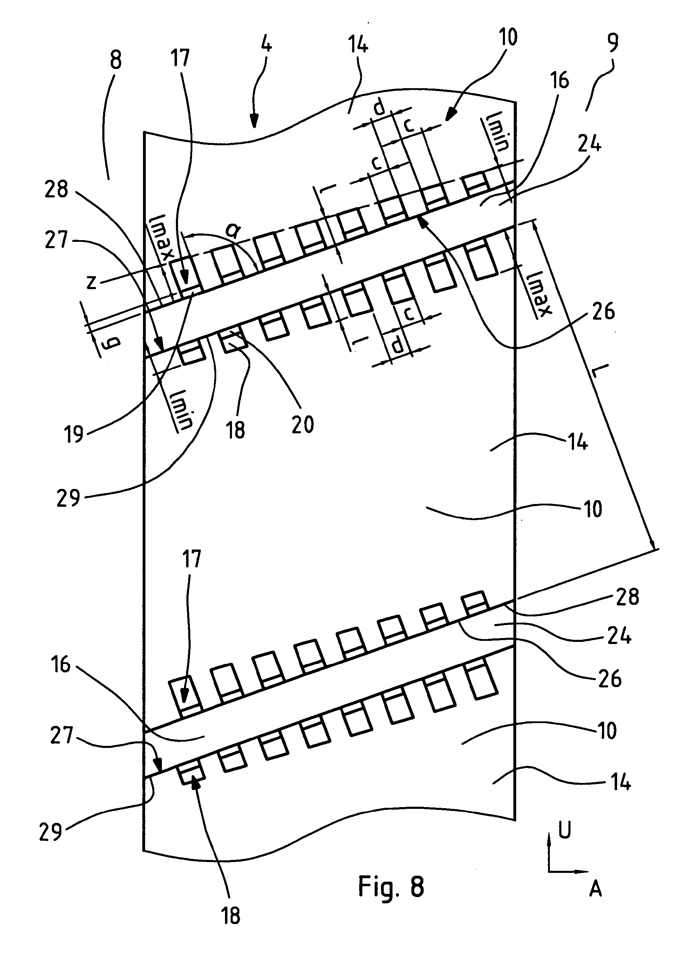

Figur 8 zeigt eine Ausführung einer Profilblockreihe 4 entsprechend der in Figur 2 dargestellten Ausführung, wobei jedoch anders als in der Darstellung von Figur 2 die längs der Schnittkante 28 ausgebildeten Vertiefungen 17 jeweils mit unterschiedlicher Erstreckungslänge 1 ausgebildet sind. Wie in Figur 8 dargestellt ist, nimmt ausgehend von der Umfangsrille 9 in axialer Richtung A in Richtung zur Umfangsrille 8 die Erstreckungslänge 1 der Vertiefungen 17 zu. Dabei ist - wie in Figur 8 zu erkennen ist - die der Umfangsrille 9 nächstgelegene Vertiefung 17 mit einer Erstreckungslänge 1 mit einem minimalen Wert 1ₘᵢₙ ausgebildet. Die hierzu in axialer Richtung A in Richtung Umfangsrille 8 benachbarte Vertiefung 17 ist bereits mit größerer Erstreckungslänge 1, die darauf folgende mit noch größerer Erstreckungslänge 1 ausgebildet. So ist jeweils die einer Vertiefung 17 in Richtung Umfangsrille 8 nächstgelegene, benachbarte Vertiefung 17 mit vergrößerter Erstreckungslänge 1 ausgebildet. Die der Umfangsrille 8 nächstgelegene Vertiefung 17 ist mit einer maximalen Erstreckungslänge 1ₘₐₓ ausgebildet. In der dargestellten Auführung nimmt dabei die Erstreckungslänge 1 von einer Vertiefung 17 zur nächstfolgenden Vertiefung 17 jeweils um das gleiche Längenmaß zu. Alle Erstreckungslängen 1 der Vertiefungen 17 liegen innerhalb der oben angegebenen Dimensionen für die Erstreckungslänge 1.

Figur 8 zeigt darüber hinaus eine weitere Ausführung, bei der die längs der Schnittkante 29 angeordneten Vertiefungen 18 ausgehend von der der Umfangsrille 8 nächstgelegenen Vertiefung 18, die eine minimale Erstreckungslänge1lₘᵢₙ aufweist, von Vertiefung 18 zu der jeweils in Richtung Umfangsrille 9 nächstgelegenen, benachbarten Vertiefung 18 mit jeweils größerer Erstreckungslänge 1 ausgebildet sind und die der Umfangsrille 9 nächstgelegene Vertiefung die größte Erstreckungslänge 1ₘₐₓ aufweist. In der dargestellten Auführung nimmt dabei die Erstreckungslänge 1 von einer Vertiefung 18 zur nächstfolgenden Vertiefung 18 jeweils um das gleiche Längenmaß zu.

Alle Erstreckungslängen 1 der Vertiefungen 18 liegen innerhalb der oben angegebenen Dimensionen für die Erstreckungslänge 1 der Vertiefungen 17.

Figur 8 zeigt darüber hinaus eine weitere alternative Ausführung, bei der in der das Profilelement 14 nach radial außen begrenzenden Oberfläche 10 eine Gerade z alle Vertiefungen 17 begrenzt. In dieser Ausführung ist das von der Schnittkante 28 wegweisende Ende einer jeden Vertiefung 17 in ihrem Verlauf nicht parallel zur Schnittkante 28, sondern Teil der Geraden z. Die Gerade z bestimmt in diesem Ausführungsbeispiel hier die Längen 1. Die Erstreckungslänge 1 ist auch längs der Erstreckung der Schnittkante 28 über die Breite c einer jeden Vertiefung 17 kontinuierlich verändert entsprechend dem Neigungsverlauf der Geraden z zur Schnittkante 28. Die Schnittkante z schließt dabei einen Winkel von kleiner 1° zur Schnittkante 28 ein.

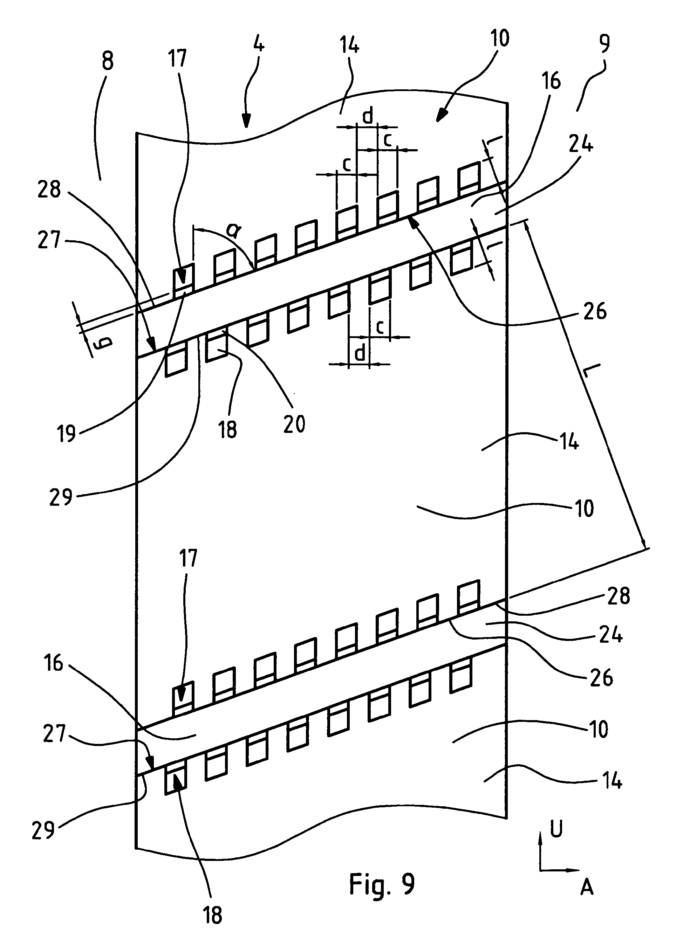

Figur 9 zeigt ein Ausführungsbeispiel analog zu dem in Figur 2 dargestellten Ausführungsbeispiel, wobei jedoch der Winkel α < 90° gewählt ist. In diesem Ausführungsbeispiel ist der Winkel α derart gewählt, dass die die Vertiefungen 17 bzw. die Vertiefungen 18 in axialer Richtung A begrenzenden Vertiefungsflanken jeweils in Umfangsrichtung U des Fahrzeugluftreifens ausgerichtet sind.

Figur 1 zeigt eine weitere Ausführung, bei der auch in den Profilblockreihen 1, 2, 3 und 5 analog zur Ausbildung der Profilblockreihe 4 jeweils korrespondierenden Vertiefungen 17 und 19 bzw. 18 und 20 ausgebildet sind.

### Bezugszeichenliste

### (Teil der Beschreibung)

- 1: Profilblockreihe
- 2: Profilblockreihe
- 3: Profilblockreihe
- 4: Profilblockreihe
- 5: Profilblockreihe
- 6: Umfangsrille
- 7: Umfangsrille
- 8: Umfangsrille
- 9: Umfangsrille
- 10: Radial nach außen begrenzende Oberfläche
- 11: Profilblockelement
- 12: Profilblockelement
- 13: Profilblockelement
- 14: Profilblockelement
- 15: Profilblockelement
- 16: Rillengrund
- 17: Nutförmige Vertiefung
- 18: Nutförmige Vertiefung
- 19: Nutförmige Vertiefung
- 20: Nutförmige Vertiefung
- 21: Querrille
- 22: Querrille
- 23: Querrille
- 24: Querrille
- 25: Querrille
- 26: Blockelementflanke
- 27: Blockelementflanke
- 28: Schnittkante
- 29: Schnittkante
- 30: Vertiefungsgrund
- 31: Vertiefungsgrund

## Patentansprüche

1. Laufstreifenprofil eines Fahrzeugluftreifens mit einer oder mehreren Profilblockreihen (1,2,3,4,5), aus in Umfangsrichtung U des Fahrzeugluftreifens hintereinander angeordneten und jeweils durch eine querverlaufende Rille (21,22,23,24,25) von einander beabstandeten Profilblockelementen (11,12,13,14,15), wobei im Bereich der Bodenaufstandsbreite TA des Laufstreifens die Profilblockelemente in radialer Richtung R nach außen jeweils durch eine die Straßenkontaktfläche bildende Mantelfläche (10) und in Umfangsrichtung U des Fahrzeugluftreifens zu beiden Seiten hin jeweils durch eine Blockflanke (26,27) begrenzt sind, wobei die eine Blockflanke (26) die eine Rillenwand der das Profilblockelement in Umfangsrichtung U zur einen Seite hin begrenzenden Rille und die andere Blockflanke (27) die eine Rillenwand der das Profilblockelement in Umfangsrichtung U zur anderen Seite hin begrenzenden Rille bildet, wobei die beiden Blockflanken (26,27) sich in radialer Richtung R des Fahrzeugluftreifens aus dem Rillengrund (16) der jeweiligen Rille (21,22,23,24,25) bis zu der die Straßenkontaktoberfläche bildenden Mantelfläche (10) des Profilblockelementes erstrecken, so dass die erste Blockflanke (26) eine erste Schnittkante (28) und die zweite Blockflanke (27) eine zweite Schnittkante (29) mit der die Straßenkontaktoberfläche bildenden Mantelfläche (10) des Profilblockelementes aufweist, wobei entlang wenigstens einer der beiden Schnittkanten (28) in der die Schnittkante (28) bildenden Blockflanke (26) eine Vielzahl n von jeweils parallelen von einander beabstandeten nutenförmigen Vertiefungen (19) ausgebildet sind, die sich von der Schnittkante (28) weg erstrecken und im Abstand m von der Schnittkante (28) in der Blockflanke (26) enden,
**dadurch gekennzeichnet,**
**dass** auch in der die Straßenkontaktoberfläche bildenden Mantelfläche (10) des Profilblockelementes (14) eine Vielzahl n von jeweils paralleler von einander beabstandeter nutenförmigen Vertiefungen (17) ausgebildet sind, die sich von der Schnittkante (28) weg erstrecken und im Abstand 1 von der Schnittkante (28) in der die Straßenkontaktoberfläche bildenden Mantelfläche (10) enden, wobei in der Schnittkante (28) jede Vertiefung (17) in der Mantelfläche (10) jeweils deckungsgleich mit genau einer Vertiefung (19) in der Blockflanke (26) mündet.

2. Laufstreifenprofil gemäß den Merkmalen von Anspruch 1,
wobei die Vielzahl n der jeweils in der Mantelfläche (10) und in der Blockflanke (26) ausgebildeten Vertiefungen mit 10 ≤ n ≤15 ist.

3. Laufstreifenprofil gemäß den Merkmalen von einem oder mehreren der vorangegangenen Ansprüche,
wobei die Vertiefungen (17,19) jeweils längs ihrer Erstreckung in der Mantelfläche (10) bzw. in der Blockflanke (26) mit einer längs der Schnittkante (28) gemessenen Breite c mit 1mm ≤ c ≤ 5 mm ausgebildet ist,
wobei insbesondere die längs der Schnittkante (28) ausgebildeten Vertiefungen (17,19) alle mit gleich großer Breite c ausgebildet sind.

4. Laufstreifenprofil gemäß den Merkmalen von einem oder mehreren der vorangegangenen Ansprüche,
wobei der parallel zur Schnittkante (28) gemessene Abstand d zweier längs der Schnittkante (28) benachbarter Vertiefungen (17,19) mit 1mm ≤ d ≤ 5 mm ausgebildet ist,
wobei insbesondere die längs der Schnittkante (28) ausgebildeten Abstände jeweils zweier benachbarter Vertiefungen (17,19) jeweils mit gleich großem Abstand d ausgebildet sind.

5. Laufstreifenprofil gemäß den Merkmalen von einem oder mehreren der vorangegangenen Ansprüche,
wobei die längs der Schnittkante (28) ausgebildeten Vertiefungen (17,19) alle mit gleich großer Breite c und die längs der Schnittkante (28) ausgebildeten Abstände jeweils zweier benachbarter Vertiefungen (17,19) jeweils mit gleich großem Abstand d ausgebildet sind,
wobei die Breite c und der Abstand d mit c = d gleich groß ausgebildet sind.

6. Laufstreifenprofil gemäß den Merkmalen von einem oder mehreren der vorangegangenen Ansprüche,
wobei die in der Mantelfläche (10) ausgebildete Vertiefung (17) längs ihrer Erstreckung von der Schnittkante (28) weg mit mindestens einer in radialer Richtung R des Fahrzeugluftreifens von der Mantelfläche aus gemessenen Tiefe f und in ihrem von der Schnittkante (28) wegweisenden Erstreckungsende mit der Tiefe f ausgebildet ist,
wobei die in der Blockflanke (26) ausgebildete Vertiefung (19) längs ihrer Erstreckung von der Schnittkante (28) weg mit mindestens einer senkrecht zur Blockflanke (26) aus gemessenen Tiefe g und in ihrem von der Schnittkante (28) wegweisenden Erstreckungsende mit der Tiefe g ausgebildet ist,
mit 0,5mm ≤f ≤ 2mm und mit 0,5mm ≤g≤ 2mm.

7. Laufstreifenprofil gemäß den Merkmalen von Anspruch 6,
wobei die in der Mantelfläche (10) ausgebildeten Vertiefung (17) längs ihrer Erstreckung ausgehend von dem von der Schnittkante (28) wegweisenden Erstreckungsende in Richtung Schnittkante (28) mit konstanter Tiefe f ausgebildet ist, und
wobei die in der Blockflanke (26) ausgebildete Vertiefung (19) längs ihrer Erstreckung ausgehend von dem von der Schnittkante (28) wegweisenden Erstreckungsende in Richtung Schnittkante (28) mit konstanter Tiefe g ausgebildet ist.

8. Laufstreifenprofil gemäß den Merkmalen von Anspruch 6,
wobei die in der Mantelfläche (10) ausgebildete Vertiefung (17) längs ihrer Erstreckung ausgehend von dem von der Schnittkante (28) wegweisenden Erstreckungsende in Richtung Schnittkante (28) mit stetig zunehmender Tiefe f ausgebildet ist, und
wobei die in der Blockflanke (26) ausgebildete Vertiefung längs ihrer Erstreckung ausgehend von dem von der Schnittkante (28) wegweisenden Erstreckungsende in Richtung Schnittkante (28) mit stetig zunehmender Tiefe g ausgebildet ist, wobei in beiden Vertiefungen (17,19) jeweils ausgehend von dem von der Schnittkante (28) wegweisenden Erstreckungsende in Richtung Schnittkante (28) der Abstand des Vertiefungsgrundes (30,31) zu der durch die beiden von der Schnittkante (28) wegweisenden Erstreckungsenden gebildeten Verbindungsebene in radialer Richtung R außerhalb der Verbindungsebene stetig bis zu einem maximalen Abstand k > 0 an der Schnittstelle des Vertiefungsgrundes (30) der in der Mantelfläche (10) ausgebildeten Vertiefung (17) mit dem Vertiefungsgrund (31) der in der Blockflanke (26) ausgebildeten Vertiefung (19) zunimmt.

9. Laufstreifenprofil gemäß den Merkmalen von Anspruch 8,
wobei die in der Mantelfläche (10) ausgebildeten Vertiefung (17) längs ihrer Erstreckung ausgehend von dem von der Schnittkante (28) wegweisenden Erstreckungsende in Richtung Schnittkante (28) mit linear zunehmender Tiefe f ausgebildet ist.

10. Laufstreifenprofil gemäß den Merkmalen von Anspruch 8 oder 9,
wobei die in der Blockflanke (26) ausgebildete Vertiefung (19) längs ihrer Erstreckung ausgehend von dem von der Schnittkante (28) wegweisenden Erstreckungsende in Richtung Schnittkante (28) mit linear zunehmender Tiefe g ausgebildet ist.

11. Laufstreifenprofil gemäß den Merkmalen von einem oder mehreren der vorangegangenen Ansprüche,
wobei jeweils der Abstand 1 von der Schnittkante (28), in dem die in der Mantelfläche (10) ausgebildeten Vertiefungen (17) enden, jeweils größer ausgebildet ist als die minimale Tiefe g der korrespondierenden Vertiefung (19) in der Blockflanke (26) mit 1 ≤ (1/5L), wobei L die in der Position der Vertiefungen (17,19) an der Schnittkante (28) in Umfangsrichtung des Fahrzeugluftreifens gemessene Erstreckungslänge des Profilblockelementes (14) angibt.

12. Laufstreifenprofil gemäß den Merkmalen von Anspruch 11,
wobei der Abstand 1 mit 2mm≤ 1:5 10≤mm ausgebildet ist.

13. Laufstreifenprofil gemäß den Merkmalen von Anspruch 11 oder 12,
wobei bei allen Vertiefungen (17) in der Mantelfläche (10) längs der Schnittkante (28) der Abstand 1 von der Schnittkante (28), in dem die Vertiefungen (17) enden, gleich groß ist.

14. Laufstreifenprofil gemäß den Merkmalen von Anspruch 11 oder 12,
wobei die längs der Erstreckung der Schnittkante (28) hintereinander angeordneten Vertiefungen (17) in der Mantelfläche (10) mit unterschiedlichem - insbesondere mit zunehmendem Abstand 1 von der Schnittkante (28) ausgebildet sind.

15. Laufstreifenprofil gemäß den Merkmalen von einem oder mehreren der vorangegangenen Ansprüche,
wobei jeweils der Abstand m von der Schnittkante (28), in dem die in der Blockflanke (26) ausgebildeten Vertiefungen (19) enden, jeweils größer ausgebildet ist als die minimale Tiefe f der korrespondierenden Vertiefung (17) in der Mantelfäche (10),
wobei der Abstand m insbesondere mit 0,5mm≤ m ≤ T ausgebildet ist, wobei T die in radialer Richtung R gemessene maximale Rillentiefe der von der Blockflanke begrenzten Rille ist.

## Claims

1. Tread-strip profile of a pneumatic vehicle tyre having one or more tread-block rows (1, 2, 3, 4, 5), comprising tread-block elements (11, 12, 13, 14, 15) which are arranged behind one another in the circumferential direction U of the pneumatic vehicle tyre and are spaced apart from one another in each case by a transversely running groove (21, 22, 23, 24, 25), the tread-block elements being delimited, in the region of the ground contact width TA of the tread strip, in the radial direction R to the outside in each case by a circumferential face (10) which forms the road contact surface and in the circumferential direction U of the pneumatic vehicle tyre towards both sides in each case by a block flank (26, 27), one block flank (26) forming one groove wall of the groove which delimits the tread-block element in the circumferential direction U towards one side, and the other block flank (27) forming one groove wall of the groove which delimits the tread-block element in the circumferential direction U towards the other side, the two block flanks (26, 27) extending in the radial direction R of the pneumatic vehicle tyre from the groove bottom (16) of the respective groove (21, 22, 23, 24, 25) as far as that circumferential face (10) of the tread-block element which forms the road contact surface, with the result that the first block flank (26) has a first cut edge (28) and the second block flank (27) has a second cut edge (29) with that circumferential face (10) of the tread-block element which forms the road contact surface, wherein, along at least one of the two cut edges (28), a multiplicity n of groove-shaped depressions (19) which are in each case parallel and spaced apart from one another are formed in the block flank (26) which forms the cut edge (28), which depressions (19) extend away from the cut edge (28) and end at the spacing m from the cut edge (28) in the block flank (26), **characterized in that** a multiplicity n of depressions (17) which are in each case parallel and spaced apart from one another are also formed **in that** circumferential face (10) of the tread-block element (14) which forms the road contact surface, which depressions (17) extend away from the cut edge (28) and end at the spacing 1 from the cut edge (28) in the circumferential face (10) which forms the road contact surface, wherein, in the cut edge (28), every depression (17) in the circumferential face (10) opens in each case congruently with exactly one depression (19) in the block flank (26).

2. Tread-strip profile according to the features of Claim 1, the multiplicity n of the depressions which are formed in each case in the circumferential face (10) and in the block flank (26) being such that 10 ≤ n ≤ 15.

3. Tread-strip profile according to the features of one or more of the preceding claims, the depressions (17, 19) being configured in each case along their extent in the circumferential face (10) or in the block flank (26) with a width c which is measured along the cut edge (28), where 1 mm ≤ c ≤ 5 mm, the depressions (17, 19) which are formed along the cut edge (28) all being configured, in particular, with an equally great width c.

4. Tread-strip profile according to the features of one or more of the preceding claims, the spacing d, measured parallel to the cut edge (28), of two depressions (17, 19) which are adjacent along the cut edge (28) being configured such that 1 mm ≤ d ≤ 5 mm, the spacings, formed along the cut edge (28), of in each case two adjacent depressions (17, 19) being configured, in particular, in each case with an equally great spacing d.

5. Tread-strip profile according to the features of one or more of the preceding claims, the depressions (17, 19) which are formed along the cut edge (28) all being configured with an equally great width c, and the spacings, formed along the cut edge (28), of in each case two adjacent depressions (17, 19) being configured in each case with an equally great spacing d, the width c and the spacing d being of equally great configuration, where c = d.

6. Tread-strip profile according to the features of one or more of the preceding claims, the depression (17) which is formed in the circumferential face (10) being configured along its extent away from the cut edge (28) with at least a depth f which is measured from the circumferential face in the radial direction R of the pneumatic vehicle tyre and with the depth f in its extent end which points away from the cut edge (28), the depression (19) which is formed in the block flank (26) being configured along its extent away from the cut edge (28) with at least a depth g which is measured perpendicularly with respect to the block flank (26) and with the depth g in its extent end which points away from the cut edge (28), where 0.5 mm ≤ f ≤ 2 mm and where 0.5 mm ≤ g ≤ 2 mm.

7. Tread-strip profile according to the features of Claim 6, the depression (17) which is formed in the circumferential face (10) being configured with a constant depth f in the direction of the cut edge (28) along its extent, starting from the extent end which points away from the cut edge (28), and the depression (19) which is formed in the block flank (26) being configured with a constant depth g in the direction of the cut edge (28) along its extent, starting from the extent end which points away from the cut edge (28).

8. Tread-strip profile according to the features of Claim 6, the depression (17) which is formed in the circumferential face (10) being configured with a constantly increasing depth f in the direction of the cut edge (28) along its extent, starting from the extent end which points away from the cut edge (28), and the depression which is formed in the block flank (26) being configured with a constantly increasing depth g in the direction of the cut edge (28) along its extent, starting from the extent end which points away from the cut edge (28), wherein, in both depressions (17, 19), in each case starting from the extent end which points away from the cut edge (28), the spacing of the depression bottom (30, 31), in the direction of the cut edge (28), from the connecting plane which is formed by the two extent ends which point away from the cut edge (28) increases constantly in the radial direction R outside the connecting plane up to a maximum spacing k > 0 at the interface of the depression bottom (30) of the depression (17) which is formed in the circumferential face (10) with the depression bottom (31) of the depression (19) which is formed in the block flank (26).

9. Tread-strip profile according to the features of Claim 8, the depression (17) which is formed in the circumferential face (10) being configured with a linearly increasing depth f in the direction of the cut edge (28) along its extent, starting from the extent end which points away from the cut edge (28).

10. Tread-strip profile according to the features of Claim 8 or 9, the depression (19) which is formed in the block flank (26) being configured with a linearly increasing depth g in the direction of the cut edge (28) along its extent, starting from the extent end which points away from the cut edge (28).

11. Tread-strip profile according to the features of one or more of the preceding claims, in each case the spacing 1 from the cut edge (28), at which the depressions (17) which are formed in the circumferential face (10) end, being in each case configured to be greater than the minimum depth g of the corresponding depression (19) in the block flank (26), where 1 ≤ (1/5L), where L specifies the extent length of the tread-block element (14), which extent length is measured in the circumferential direction of the pneumatic vehicle tyre in the position of the depressions (17, 19) on the cut edge (28).

12. Tread-strip profile according to the features of Claim 11, the spacing 1 being configured such that 2 mm ≤ 1 ≤ 10 mm.

13. Tread-strip profile according to the features of Claim 11 or 12, the spacing 1 from the cut edge (28), at which the depressions (17) end, being equally great in the case of all depressions (17) in the circumferential face (10) along the cut edge (28).

14. Tread-strip profile according to the features of Claim 11 or 12, the depressions (17) which are arranged behind one another along the extent of the cut edge (28) being formed in the circumferential face (10) with a different, in particular with an increasing, spacing 1 from the cut edge (28).

15. Tread-strip profile according to the features of one or more of the preceding claims, in each case the spacing m from the cut edge (28), at which the depressions (19) which are formed in the block flank (26) end, being in each case configured to be greater than the minimum depth f of the corresponding depression (17) in the circumferential face (10), the spacing m being configured, in particular, such that 0.5 mm ≤ m ≤T, where T is the maximum groove depth, measured in the radial direction R, of the groove which is delimited by the block flank.

## Revendications

1. Profil de bande de roulement pour bandage pneumatique de roue de véhicule,
le profil présentant une ou plusieurs rangées (1, 2, 3, 4, 5) de blocs profilés constituées d'éléments (11, 12, 13, 14, 15) de bloc profilé disposés les uns derrière les autres dans la direction périphérique U du bandage pneumatique de roue de véhicule et étant séparés les uns des autres par une rainure transversale respective (21, 22, 23, 24, 25),
chacun des éléments de bloc profilé étant au niveau de la largeur TA d'appui au sol de la bande de roulement délimité vers l'extérieur dans la direction radiale par une surface d'enveloppe (10) qui forme la surface de contact avec la chaussée et des deux côtés dans la direction périphérique U du bandage pneumatique de roue de véhicule par un flanc (26, 27) de bloc, un flanc de bloc (26) formant une paroi de la rainure qui délimite d'un côté l'élément de bloc profilé dans la direction périphérique U et l'autre flanc de bloc (27) formant la paroi de la rainure qui délimite de l'autre côté l'élément de bloc profilé dans la direction périphérique U,
les deux flancs de bloc (26, 27) s'étendant dans la direction radiale R du bandage pneumatique de roue de véhicule depuis le fond (16) de chaque rainure (21, 22, 23, 24, 25) jusqu'à la surface d'enveloppe (10) de l'élément de bloc profilé qui forme la surface de contact avec la chaussée, de sorte que le premier flanc de bloc (26) présente une première arête de coupe (28) et le deuxième flanc de bloc (27) une deuxième arête de coupe (29) avec la surface d'enveloppe (10) de l'élément de bloc profilé qui forme la surface de contact avec la chaussée,
un nombre n de creux (19) en forme de rainure, parallèles et distincts les uns des autres, qui s'éloignent de l'arête de coupe (28) et qui se terminent à une distance m de l'arête de coupe (28) dans le flanc de bloc (26) étant formé le long d'au moins l'une des deux arêtes de coupe (28) dans laquelle le flanc de bloc (26) qui forme l'arête de coupe (28) se termine,
**caractérisé en ce que**
un nombre n de creux (17) en forme de rainure, parallèles et distants les uns des autres, qui s'éloignent de l'arête de coupe (28) et qui se terminent à distance 1 de l'arête de coupe (28) dans la surface d'enveloppe (10) qui forme la surface de contact avec le sol est également formé dans la surface d'enveloppe (10) de l'élément (14) de bloc profilé qui forme la surface de contact avec le sol,
chaque creux (17) ménagé dans la surface d'enveloppe (10) débouchant dans l'arête de coupe (28) en recouvrant exactement un creux (19) ménagé dans le flanc de bloc (26).

2. Profil de bande de roulement selon les caractéristiques de la revendication 1, dans lequel le nombre n de creux formés dans la surface d'enveloppe (10) et dans le flanc de bloc (26) vérifie la relation 10 ≤ n ≤ 15.

3. Profil de bande de roulement selon les caractéristiques d'une ou plusieurs des revendications précédentes, dans lequel chacun des creux (17, 19) présente dans son extension dans la surface d'enveloppe (10) ou dans le flanc de bloc (26) une largeur c, mesurée le long de l'arête de coupe (28), qui vérifie la relation 1 mm ≤ c ≤ 5 mm, les creux (17, 19) formés le long de l'arête de coupe (28) présentant tous la même largeur c.

4. Profil de bande de roulement selon les caractéristiques d'une ou plusieurs des revendications précédentes, dans lequel la distance d mesurée parallèlement à l'arête de coupe (28), de deux creux (17, 19) voisins le long de l'arête de coupe (28) vérifie la relation 1 mm ≤ d ≤ 5 mm, les distances le long de l'arête de coupe (28) de deux creux (17,19) voisins étant en particulier toutes deux la même distance d.

5. Profil de bande de roulement selon les caractéristiques d'une ou plusieurs des revendications précédentes, dans lequel tous les creux (17, 19) formés le long de l'arête de coupe (28) ont la même largeur c et toutes les distances formées le long de l'arête de coupe (28) entre deux creux voisins (17, 19) ont la même distance d, la largeur c et la distance d ayant la même valeur, avec c = d.

6. Profil de bande de roulement selon les caractéristiques d'une ou plusieurs des revendications précédentes, dans lequel dans son extension depuis l'arête de coupe (28), le creux (17) formé dans la surface d'enveloppe (10) présente au moins une profondeur f, mesurée depuis la surface d'enveloppe dans la direction radiale R du bandage pneumatique de roue de véhicule et présente la profondeur f à l'extrémité de son extension qui n'est pas tournée vers l'arête de coupe (28), le creux (19) formé dans le flanc de bloc (26) présentant au moins une profondeur g mesurée perpendiculairement au flanc de bloc (26) dans son extension depuis l'arête de coupe (28) et la profondeur g à l'extrémité de son extension non tournée vers l'arête de coupe (28), avec 0,5 mm ≤ f ≤ 2 mm et 0,5 mm ≤ g ≤ 2 mm.

7. Profil de bande de roulement selon les caractéristiques de la revendication 6, dans lequel depuis son extrémité en direction de l'arête de coupe (28) non tournée vers l'arête de coupe (28), le creux (17) formé dans la surface d'enveloppe (10) présente une profondeur constante f, le creux (19) formé dans le flanc de bloc (26) présentant en direction de l'arête de coupe (28) une profondeur constante g depuis son extrémité non tournée vers l'arête de coupe (28).

8. Profil de bande de roulement selon les caractéristiques de la revendication 6, dans lequel le creux (17) formé dans la surface d'enveloppe (10) présente dans son extension en direction de l'arête de coupe (28) et partant de l'extrémité de son extension non tournée vers l'arête de coupe (28) une profondeur f qui croît de manière constante, le creux formé dans le flanc de bloc (26) présentant dans son extension en direction de l'arête de coupe (28) et partant de l'extrémité de son extension non tournée vers l'arête de coupe (28) une profondeur g qui croît de manière constante, tandis que dans les deux creux (17, 19), chaque fois partant de l'extrémité de leur extension en direction de l'arête de coupe (28) non tournée vers l'arête de coupe (28), la distance entre le fond (30, 31) du creux et le plan de liaison formé par les deux extrémités de leur extension non tournée vers l'arête de coupe (28) dans la direction radiale R et à l'extérieur du plan de liaison, augmente de manière constante jusqu'à une distance maximale k > 0 à l'interface entre le fond (30) du creux (17) formé dans la surface d'enveloppe (10) et le fond (31) du creux (19) formé dans le flanc de bloc (26).

9. Profil de bande de roulement selon les caractéristiques de la revendication 8, dans lequel le creux (17) formé dans la surface d'enveloppe (10) présente le long de son extension, partant de l'extrémité de son extension en direction de l'arête de coupe (28) non tournée vers l'arête de coupe (28), une profondeur f qui croît de manière linéaire.

10. Profil de bande de roulement selon les caractéristiques des revendications 8 ou 9, dans lequel le creux (19) formé dans le flanc de bloc (26) présente le long de son extension, partant de l'extrémité de son extension dans la direction de l'arête de coupe (28) non tournée vers l'arête de coupe (28) une profondeur g qui croît de manière linéaire.

11. Profil de bande de roulement selon les caractéristiques d'une ou plusieurs des revendications précédentes, dans lequel la distance 1 entre l'arête de coupe (28) à laquelle les creux (17) formés dans la surface d'enveloppe (10) se terminent est plus grande que la profondeur minimale g du creux (19) correspondant du flanc de bloc (26), avec 1 ≤ (1/5L), L désignant la longueur de l'extension de l'élément (14) de bloc profilé mesurée dans la direction périphérique du bandage pneumatique de roue de véhicule sur l'arête de coupe (28) en la position des creux (17, 19).

12. Profil de bande de roulement selon les caractéristiques de la revendication 11, dans lequel la distance 1 vérifie la relation 2 mm ≤ 1 ≤ 10 m.

13. Profil de bande de roulement selon les caractéristiques des revendications 11 ou 12, dans lequel la distance 1 par rapport à l'arête de coupe (28) à laquelle les creux (17) se terminent est la même pour tous les creux (17) ménagés dans la surface d'enveloppe (10) le long de l'arête de coupe (28).

14. Profil de bande de roulement selon les caractéristiques des revendications 11 ou 12, dans lequel les creux (17) disposés les uns derrière les autres le long de l'extension de l'arête de coupe (28) dans la surface d'enveloppe (10) présentent une distance 1 différente et en particulier une distance 1 croissante par rapport à l'arête de coupe (28).

15. Profil de bande de roulement selon les caractéristiques d'une ou plusieurs des revendications précédentes, dans lequel la distance m par rapport à l'arête de coupe (28) à laquelle les creux (19) formés dans le flanc de bloc (26) se terminent est plus grande que la profondeur minimale du creux (17) correspondant de la surface d'enveloppe (10), la distance m vérifiant en particulier la relation 0,5 mm ≤ m ≤ T, T étant la profondeur maximale de la rainure délimitée par le flanc de bloc, mesurée dans la direction radiale R.
